# EUROPEAN PATENT SPECIFICATION

(11) **EP 3 893 464 B1**
(45) Date of publication and mention of the grant of the patent: **06.03.2024**
(21) Application number: 19894999.2
(22) Date of filing: 21.11.2019
(51) Int. Cl.: H04L 67/1097

(54) **METHOD FOR TRANSMITTING IMAGE, TERMINAL AND STORAGE MEDIUM**
VERFAHREN ZUR ÜBERTRAGUNG VON BILDERN, ENDGERÄT UND SPEICHERMEDIUM
PROCÉDÉ DE TRANSMISSION D'IMAGE, TERMINAL ET SUPPORT DE STOCKAGE

(30) Priority: 11.12.2018 CN 201811509685
(43) Date of publication of application: 13.10.2021
(73) Proprietor: ZTE Corporation, Shenzhen, Guangdong 518057 (CN)
(72) Inventor: ZHOU, Ji, Shenzhen, Guangdong 518057 (CN)
(74) Representative: Swindell & Pearson Limited
(86) International application number: PCT/CN2019/119845
(87) International publication number: WO 2020/119411

(56) References cited:
- HUA YU ET AL: "SmartEye: Real-time and efficient cloud image sharing for disaster environments", 2015 IEEE CONFERENCE ON COMPUTER COMMUNICATIONS (INFOCOM), IEEE, 26 April 2015 (2015-04-26), pages 1616-1624, XP033208433, DOI: 10.1109/INFOCOM.2015.7218541 [retrieved on 2015-08-21]

## Description

### TECHNICAL FIELD

Embodiments of the present disclosure relate to the field of computers, and in particular to an image transmission method, a terminal apparatus and a computer-readable storage medium.

### BACKGROUND

Currently, under the cloud desktop protocol, cloud terminals may include image acquisition devices, display devices or the like. Common image acquisition devices include high-speed photographic apparatuses, cameras, scanners or the like. After a cloud terminal acquires images by an image acquisition device, the cloud terminal performs special processing such as compression/encoding on the images, and transmits the processed images to a cloud desktop in real time. Subsequently, the images are restored at the cloud desktop, processed by an application to obtain cloud desktop images, and transmitted to a display device of the cloud terminal in real time for displaying, so that a user can view the shot/photographed images.

Document HUA YU ET AL: "SmartEye: Real-time and efficient cloud image sharing for disaster environments", 2015 IEEE CONFERENCE ON COMPUTER COMMUNICATIONS (INFOCOM), IEEE, 26 April 2015 (2015-04-26), pages 1616-1624, XP033208433, DOI: 10.1109/ INFOCOM.2015.7218541 discloses efficient image sharing which is helpful to disaster detection and scene recognition.

In some cases, there are the following problems. Due to a long path for the image to be transmitted from the cloud terminal to the cloud desktop and then returned to the cloud terminal, the efficiency is low, so that the displayed image is unsatisfactory for the user in terms of delay, resolution and the like. To improve the display efficiency, those having ordinary skill in the art propose a local backhaul technology in which a link is additionally provided on the basis of the original process. That is, an image is directly displayed locally on the cloud terminal when this image is transmitted to the cloud desktop, so that better experience is brought to users. However, in the local backhaul technology, since data transmission is always performed between the cloud terminal and the cloud desktop, the network bandwidth is much occupied by the local backhaul technology, and the load of the cloud desktop is not reduced. Therefore, both the concurrency of networks and the concurrency of servers are still not improved.

### SUMMARY

The embodiments of the present disclosure provide an image transmission method, a terminal apparatus and a computer-readable storage medium. By selecting an image to be transmitted from N images captured by an image acquisition device and transmitting the image to be transmitted to a cloud desktop, the requirement for data transmission bandwidth between the cloud terminal and the cloud desktop is reduced, and it is ensured that the acquired image can still be clearly and smoothly displayed on the cloud terminal in the case of limited data transmitted bandwidth.

An embodiment of the present disclosure provides an image transmission method applicable to a cloud terminal. The method includes: acquiring a plurality of images captured by the image acquisition device, calculating a similarity between an iₜₕ captured image and an (i-1)tₕ captured image, and storing the iₜₕ captured image into a cache in response to the calculated similarity not exceeding a preset threshold, the i being an integer no less than 2; acquiring N images captured by the image acquisition device and consecutively stored into the cache, N being an integer greater than 1; calculating similarities between the N images and a reference image, respectively, the reference image being a locally stored image that is transmitted to a cloud desktop last time; determining a minimum of the similarities between the N images and the reference image, and selecting an image corresponding to the minimum as the image to be transmitted; and transmitting the image to be transmitted to the cloud desktop; wherein calculating a similarity between an iₜₕ captured image and an (i-1)ₜₕ captured image comprises: dividing the iₜₕ captured image into a number of small blocks, comparing grey level and/or brightness and/or contrast of each small block of the iₜₕ captured image to the grey level and/or brightness and/or contrast of each corresponding small block of the (i-1)ₜₕ captured image, and calculating a change value of the grey level and/or brightness and/or contrast; and wherein calculating similarities between the N images and a reference image comprises: dividing each of the N images and the reference image into a number of small blocks, comparing grey level and/or brightness and/or contrast of each small block of the N images to the grey level and/or brightness and/or contrast of each corresponding small block of the reference image, and calculating a change value of the grey level and/or brightness and/or contrast.

An embodiment of the present disclosure provides a terminal apparatus. The terminal apparatus includes: at least one processor; and a memory in communicative connection to the at least one processor, where, the memory stores instructions which, when executed by the at least one processor, cause the at least one processor to execute the image transmission method above.

An embodiment of the present disclosure provides a non-transient computer-readable storage medium storing computer-executable instructions which, when executed by at least one processor, cause the at least one processor to execute the image transmission method above.

### BRIEF DESCRIPTION OF DRAWINGS

One or more embodiments are illustrated with the accompanying drawings, which do not constitute a limitation to the embodiments, and elements having the same reference numerals in the drawings are denoted as similar elements, unless specifically stated, the figures in the drawings do not constitute scale limitations.
Fig. 1 is a flowchart of an image transmission method according to embodiment one of the present disclosure;
Fig. 2 is a flowchart of an image transmission method according to embodiment two of the present disclosure;
Fig. 3 is a flowchart of acquiring an input certificate image according to embodiment two of the present disclosure;
Fig. 4 is a schematic diagram of a state change of the input image according to embodiment two of the present disclosure;
Fig. 5 is a coordinate graph of bandwidth comparison according to embodiment two of the present disclosure;
Fig. 6 is a flowchart of an image transmission method according to embodiment three of the present disclosure;
Fig. 7 is a block diagram of an image transmission apparatus according to embodiment four of the present disclosure;
Fig. 8 is a block diagram of an image transmission apparatus according to embodiment five of the present disclosure; and
Fig. 9 is a structure diagram of a terminal apparatus according to embodiment six of the present disclosure.

### DETAILED DESCRIPTION

In order to explain the purposes, technical schemes and advantages of the embodiments of the present disclosure, various embodiments of the present disclosure are described in detail below with reference to the accompanying drawings. Those having ordinary skills in the art will appreciate that in various embodiments of the present disclosure, additional technical details may be proposed for a purpose of understanding the present disclosure. However, the technical schemes according to the present disclosure can be realized even without these additional technical details and various changes and modifications based on the following embodiments.

Embodiment one of the present disclosure relates to an image transmission method by which the number of data transmissions between a cloud terminal and a cloud desktop is decreased and it is ensured that an acquired image can still be clearly and smoothly displayed on the cloud terminal in the case of limited data transmission bandwidth. The implementation details of the image transmission method provided in this embodiment will be described below. The following content merely facilitates the understanding of the implementation details of this scheme, and the implementation of this scheme is not necessarily limited thereto.

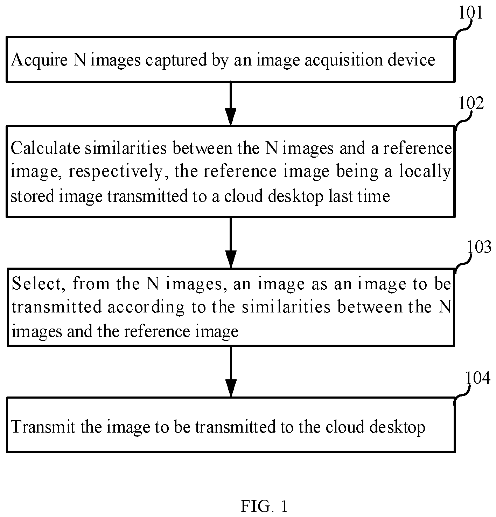

Fig. 1 is a flowchart of the image transmission method provided in this embodiment. This method is applicable to various intelligent terminals, such as a cloud terminal, a tablet computer or the like. The method includes the following steps S101 to S104.

At step S101, N images captured by an image acquisition device are acquired.

In an implementation, N images are captured by the image acquisition device, where N is an integer greater than 1. The image acquisition device is a high-speed photographic apparatus, a camera, a scanner or a build-in photographic apparatus of the cloud terminal. In some embodiments, the cloud terminal is equipped with a camera, so when a user opens an account at the counter of the bank business hall, facial images can be shot by this camera, and N facial images are acquired.

At step S102, similarities between the N images and a reference image are calculated respectively, where the reference image is a locally stored image that is previously transmitted to a cloud desktop.

In an implementation, the similarities between the N images and the locally stored image that is transmitted to the cloud desktop last time are calculated. In some embodiments, when a user applies for a service in the bank business hall, the similarity between each of the N images and the locally stored image that is transmitted to the cloud desktop last time is calculated.

At step S103, an image is selected from the N images as an image to be transmitted according to the similarities between the N images and the reference image.

In an implementation, an image is selected from the N images as an image to be transmitted according to the similarities between the N images and the reference image, where the image to be transmitted needs to contain particular features. In some embodiments, in the bank business hall, when a personnel starts to handle the business, a customer with a called number goes to the counter and sits down. At this time, images captured by a front camera will change, where the captured images are changed from original images without human face to images with human face. If the human face is specified as a particular feature, the cloud terminal acquires N input images from the front camera and then selects an image containing the human face from the N images, so that the image containing the human face is used as an image to be transmitted.

At step S104, the image to be transmitted is transmitted to the cloud desktop.

In an implementation, the cloud terminal samples and/or encodes the image to be transmitted before transmitting the image to be transmitted to the cloud desktop. Correspondingly, upon receiving the image transmitted by the cloud terminal, the cloud desktop decodes this image.

After the image to be transmitted is transmitted to the cloud desktop, an image returned by the cloud desktop is received; and the image returned by the cloud desktop is transmitted to a display device for displaying.

Correspondingly, after decoding the image, the cloud desktop returns the decoded image to the cloud terminal; and, upon receiving the image returned by the cloud desktop, the cloud terminal transmits the returned image to the display device for displaying, or displays this image on an application installed in the cloud terminal and used for displaying images.

In this embodiment, by selecting, from N images captured by the image acquisition device, an image as an image to be transmitted, and transmitting the image to be transmitted to the cloud desktop, the number of data transmissions between the cloud terminal and the cloud desktop can be decreased, and the requirement for network bandwidth between the cloud terminal and the cloud desktop in the local backhaul technology can be reduced, thereby ensuring that the acquired image can still be clearly and smoothly displayed on the cloud terminal in the case of limited data transmitted bandwidth.

Embodiment two of the present disclosure relates to an image transmission method. This embodiment is substantially the same as embodiment one, except for the following main difference: the image having the minimum similarity with the locally stored image that is transmitted to the desktop last time is used as the image to be transmitted.

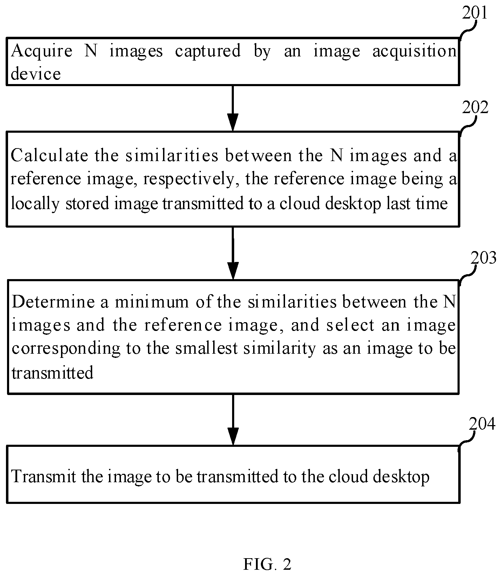

Fig. 2 is a flowchart of the image transmission method provided in this embodiment. This method is applicable to various intelligent terminals, such as a cloud terminal, a tablet computer or the like. The method includes the following steps S201 to S205.

At step S201, N images captured by an image acquisition device are acquired.

Each image captured by the image acquisition device is acquired; a similarity between an iₜₕ captured image and an (i-1)ₜₕ captured image is calculated, and the iₜₕ captured image is stored into a cache if the calculated similarity does not exceed a first preset threshold, where i is an integer greater than or equal to 2; and, N images that are consecutively stored into the cache and captured by the image acquisition device are acquired.

By storing, into the cache, the image having a similarity with the image input last time that does not exceed the first preset threshold, it is ensured that the images stored into the cache have great changes, and the validity of the selected input image is ensured, thereby preparing for further screening of the image to be transmitted and reducing the number of image transmissions to the cloud desktop.

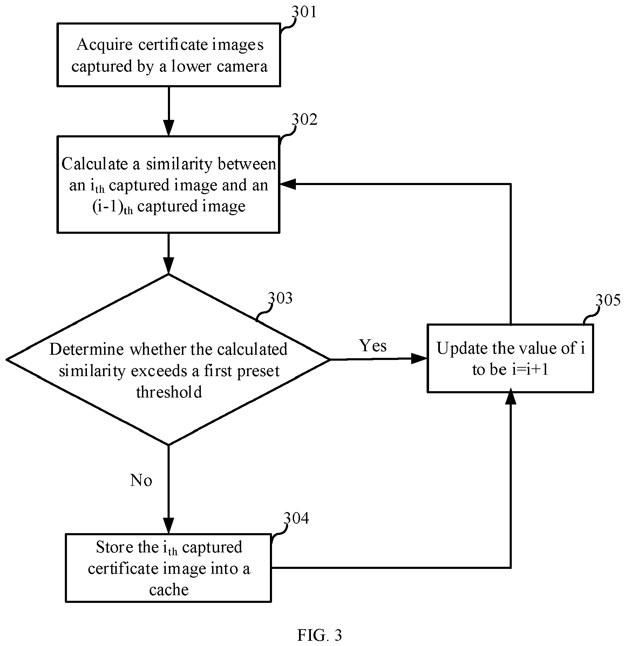

In some embodiments, after a customer shows his/her ID card to a bank clerk, the clerk places the customer's ID card on the countertop with a lower camera. A method in which the cloud terminal acquires images of the ID card by the lower camera is shown in Fig. 3. The method includes the following steps S301 to S305.

At step S301, each of a plurality of certificate images captured by the lower camera is acquired.

At step S302, a similarity between an iₜₕ captured image and an (i-1)ₜₕ captured image is calculated.

At step S303, it is determined whether the calculated similarity exceeds a first preset threshold; if the calculated similarity does not exceed the first preset threshold, step S304 will be executed; and, if the calculated similarity exceeds the first preset threshold, step S305 will be executed.

At step S304, the iₜₕ captured certificate image is stored into a cache, and step S305 will be executed.

At step S305, the value of i is updated to be i=i+1, and step S302 is continued to be executed.

It is to be noted that, by cyclically executing the steps S302 to S305, N eligible certificate images are stored into the cache, so that N images captured by the image acquisition device and consecutively stored into the cache are acquired.

At step S202, similarities between the N images and a reference image are calculated respectively, where the reference image is a locally stored image that is transmitted to a cloud desktop last time.

In an implementation, the similarity between each image in the cache and the locally stored image that is transmitted to the cloud desktop last time is calculated. In some embodiments, when a customer applies for a service in the bank business hall, the similarity between each of the N images stored into the cache and the locally stored image that is transmitted to the cloud desktop last time is calculated.

In an implementation, to better evaluate the similarity between the input image and the locally stored image that is transmitted to the cloud desktop last time, the input image is divided into a number of small blocks, and the features such as grey level and/or brightness and/or contrast of each small block of the image are compared and calculated. In some embodiments, each certificate image in the cache is divided into 64 small blocks, and the locally stored certificate image that is transmitted to the cloud desktop last time is also divided into 64 small blocks. Then, a change value of the grey level of each small block in the input certificate image relative to the grey level of each corresponding small block in the locally stored certificate image that is transmitted to the cloud desktop last time is calculated, and/or a change value of the brightness of each small block in the input certificate image relative to the brightness of each corresponding small block in the locally stored certificate image that is transmitted to the cloud desktop last time is calculated, and/or a change value of the contrast of each small block in the input certificate image relative to the contrast of each corresponding small block in the locally stored certificate image that is transmitted to the cloud desktop last time is calculated.

At step S203, a minimum of the similarities between the N images and the reference image is determined, and an image corresponding to the minimum is selected as an image to be transmitted.

The minimum of the similarities between the N images and the reference image is determined, and an image corresponding to the minimum is selected as an image to be transmitted.

In an implementation, the locally stored image that is transmitted to the desktop last time is an image of the side face of this customer. Within a certain period of time, this customer turns his/her head and faces the camera for acquisition, the acquired N consecutive images are N consecutive images of this customer changing from the side face to the front face, and a facial image of this customer facing the camera (with his front face) is finally selected as an image to be transmitted. Since the facial image of a customer facing the camera has the greatest change relative to the locally stored image that is transmitted to the cloud desktop last time, i.e., the image of the side face of a customer, the facial image having the minimum similarity is selected as the image to be transmitted.

At step S204, the image to be transmitted is transmitted to the cloud desktop.

In an implementation, when a customer applies for a service in the bank business hall, the cloud terminal transmits, to the cloud desktop, facial images of the customer, and transmits the certificate image having the minimum similarity to the cloud desktop upon acquiring the certificate images.

It is to be noted that, since some certificates carry facial images, it is necessary to distinguish whether this image is a facial image or a certificate image according to the device number of the camera corresponding to the input image.

After the image to be transmitted is transmitted to the cloud desktop, images other than the image to be transmitted in the N images are deleted from the cache.

During applications, the time of inputting an image can be set according to scenario requirements. In some embodiments, as an application scenario at a bank business hall, the whole certificate identification process is divided into four states, and the time of inputting an image is determined by identifying the images shot by the camera. The four states include state 00, state 01, state 10 and state 11.

When the shot certificate image is in the state 01 or 11, corresponding to the steps S301 to S303, the similarity between a current input certificate image and a previous input certificate image is compared. If the similarity does not exceed the first preset threshold, the certificate image input this time is stored into the cache. The cache stores N certificate images, and the similarity between each of the N certificate images in the cache and the locally stored certificate image that is transmitted to the cloud desktop last time is calculated. A minimum of the N similarities is selected, and the certificate image corresponding to the minimum similarity is used as the image to be transmitted.

When the clerk places the customer's ID card (i.e. certificate) on the countertop with a lower camera, the process of placing the certificate, in some embodiments, includes a process of putting down the certificate and a process of taking away the certificate, where the process of putting down the certificate includes state 00 and state 01 and the process of taking away the certificate includes state 10 and state 11.

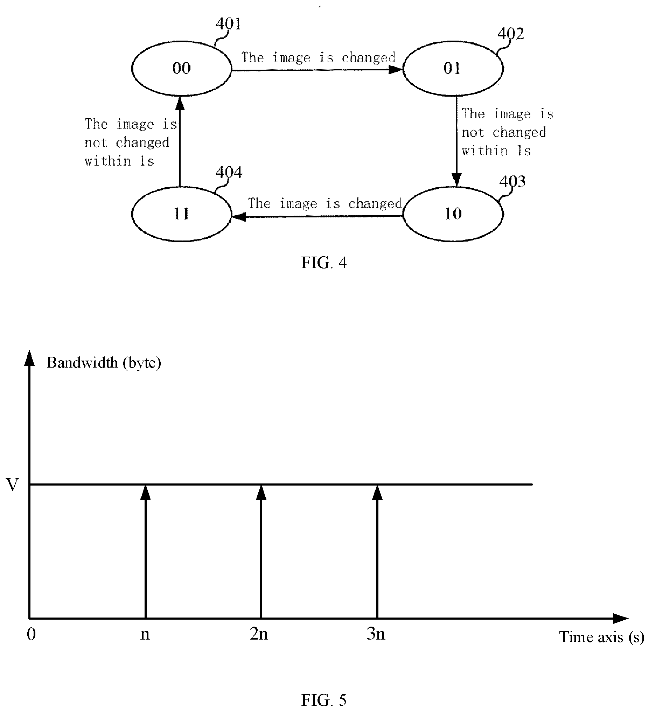

As shown in Fig. 4, the process of switching the four states, in some embodiments, includes the following steps S401 to S404.

At step S401, an image where no certificate is placed is defined as the state 00. In the state 00, the clerk places the customer's ID card on the countertop with a lower camera, and the process proceeds to step 402.

At step S402, the images shot by the camera show the change process from an image without the certificate to a clear certificate image, i.e., switching from the state 00 to the state 01. The state where the certificate images captured by the camera start to change continuously is defined as the state 01. After the certificate is placed and the clerk's hand leaves, the certificate images are not changed within a certain period of time, for example, 1 second, the process proceeds to step 403.

It is to be noted that, when the certificate images are in the state 01, the certificate images input at this time are changed continuously, the cloud terminal will acquire N certificate images that are changed to different degrees and store these certificate images into the cache. N different similarity values can be obtained by calculating the similarity between each certificate image in the cache and the locally stored certificate image that is transmitted to the cloud desktop last time, and the certificate image corresponding to the minimum similarity value is used as the image to be transmitted, where the value of N is an integer less than 30.

At step S403, when the cloud terminal detects that the certificate images are not changed within a period of time, for example, 1 second, the state 01 is switched to the state 10. If the business has been handled and completed, the clerk takes away the ID card from the countertop, and the cloud terminal detects that the images are changed continuously, the process proceeds to step S404.

At step S404, when the cloud terminal detects that the acquired certificate images are gradually changed from the clear certificate image to the image without the certificate, that is, the certificate images are changed continuously, the state 10 is switched to the state 11.

It is to be noted that, in the state 11, the cloud terminal will also acquire N certificate images that are changed to different degrees. The process of processing the acquired N images in the state 11 is the same as the process of processing of the acquired N images in the state 01 and thus will not be repeated here.

After the clerk takes away the certificate, if the cloud terminal detects that the certificate images are not changed within a certain period of time, for example, 1 second, the state of the certificate images is returned to the original state 00.

In this embodiment, by calculating the similarity between each of the N images stored into the cache and the locally stored image that is transmitted to the cloud desktop last time, selecting a minimum of the N similarities and using the image corresponding to the minimum similarity as the image to be transmitted, the number of images transmitted to the cloud desktop by the cloud terminal can be decreased, and the requirement for data transmission bandwidth between the cloud terminal and the cloud desktop can be reduced.

As shown in Fig. 5, if a horizontal axis of a rectangular coordinate system is defined to represent time and a vertical axis of this rectangular coordinate system is defined as a number of bytes of the occupied bandwidth, the bandwidth occupation in the existing technology can be compared with the bandwidth occupation in this embodiment in the same coordinate system. In the existing technology, during transmission between the cloud terminal and the cloud desktop, a certain bandwidth will be continuously occupied. As shown in Fig. 5, there is a horizontal line that occupies v bytes of bandwidth at any time. However, in this embodiment, only the image having the greatest change is transmitted to the cloud desktop, so there are bandwidth pulses only at several time points, in some embodiments the bandwidth pulses with a bandwidth of v bytes at time points n, 2n and 3n as shown in Fig. 5, where the transmission interval is n seconds, the transmitted images are uniform in size, and the frame rate per second is v bytes per second (bps). In this embodiment, the occupied uplink transmission bandwidth for uploading images is reduced by 1-1/nv. If n=1.25 and v=16, the uplink transmission bandwidth is reduced by 95%, so that the transmission bandwidth is greatly saved.

Embodiment three of the present disclosure relates to an image transmission method. embodiment three is substantially the same as embodiment one, except for the following main difference: the image to be transmitted is transmitted to the desktop at fixed time intervals.

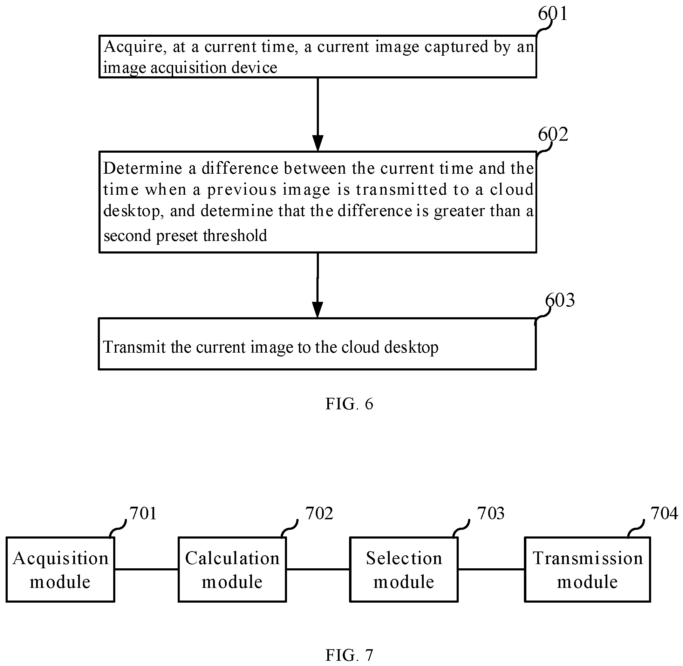

Fig. 6 is a flowchart of the image transmission method provided in this embodiment. This method is applicable to various intelligent terminals, such as a cloud terminal, a tablet computer or the like. The method includes the following steps S601 to S603.

At step S601, a current image captured by an image acquisition device at a current time is acquired.

It is to be noted that, before an image input at the current time point is acquired, an image acquired for the first time will be transmitted to the cloud desktop. Particularly, when a timer is started for the first time, the acquired first image needs to be stored locally as the first "locally stored image that is transmitted to the cloud desktop last time".

At step S602, a difference between the current time and the time when an image is transmitted to the cloud desktop last time is determined, and it is determined that the difference is greater that a second preset threshold.

It is to be noted that the second preset threshold can be set according to an empirical value obtained by observation or testing in the use environment by the actual user. In some embodiments, when a customer applies for a service in the bank business hall, it usually takes 2.5 seconds from the time when the customer is ready to sit down in front of the camera to the time when this customer is seated. Therefore, according to the clerk's experience, the second preset threshold may be set to be 2.5 seconds, that is, an image is transmitted to the cloud desktop every 2.5 seconds. If the image is a certificate image, it usually takes 1 second from the time when the clerk starts to place the certificate to the time when the certificate is placed. Therefore, the second preset threshold may be set to be 1 second, that is, an image is transmitted to the cloud desktop every 1 second.

It is to be noted, if it is determined that the difference between the current time and the time when an image is transmitted to the cloud desktop last time is less than or equal to the second preset threshold, the locally stored image that is transmitted to the cloud desktop last time is transmitted to the display device for displaying.

At step S603, the current image is transmitted to the cloud desktop.

It is to be noted that, at the end of step S603, it is necessary to store, into a local cache, the image input at the current time point to serve as the next "locally stored image that is transmitted to the cloud desktop last time".

In this embodiment, the cloud terminal periodically transmits, to the cloud desktop, the current image captured by the image acquisition device, so that the number of data transmissions between the cloud terminal and the cloud desktop can be reduced, and the requirement for data transmission bandwidth between the cloud terminal and the cloud desktop can be reduced.

For the clarity of description, in some embodiments, the steps of the above methods are combined into one step, or a step is split into multiple steps, which are both within the scope of the present disclosure as long as they include the same logical relationship. Irrelevant modifications or introducing irrelevant designs added to the algorithm or process, but not changing the core design of the algorithm and process, are within the scope of the present disclosure .

Embodiment four according to the present disclosure relates to an image transmission apparatus, and implementations of the apparatus is described with reference to embodiment one or two, but are not limited to the above two embodiments, and other undescribed embodiments are also within the scope of the apparatus.

As shown in Fig. 7, the image transmission apparatus includes: an acquisition module 701 configured to acquire N images captured by an image acquisition device, where N is an integer greater than 1; a calculation module 702 configured to calculate the similarities between the N images and a reference image, respectively, where the reference image is a locally stored image that is transmitted to a cloud desktop last time; a selection module 703 configured to select, from the N images, an image as an image to be transmitted according to the similarities between the N images and the reference image; and a transmission module 704 configured to transmit the image to be transmitted to the cloud desktop.

It is not difficult to find that this embodiment is a system embodiment corresponding to embodiment one or two, and this embodiment can be implemented in cooperation with embodiment one or two. The related technical details mentioned in embodiment one or two are also applicable in this embodiment, and are not described herein for simplicity. Accordingly, the related technical details mentioned in this embodiment can also be applied to embodiment one or two.

It should be noted that each module involved in this embodiment is a logical module. In actual application, a logical unit may be a physical unit or a part of a physical unit, or may be implemented in a combination of a plurality of physical units. In addition, in order to highlight the inventive part of the present disclosure, a unit that is not closely related to solving the technical problems proposed in the present disclosure is not introduced in the present embodiment, but this does not indicate that there are no other units in the present embodiment.

Embodiment five of the present disclosure relates to an image transmission apparatus. The implementation of the apparatus can be referred to the related description of embodiment three, but not limited to embodiment three. Other undescribed embodiments are also within the scope of the apparatus.

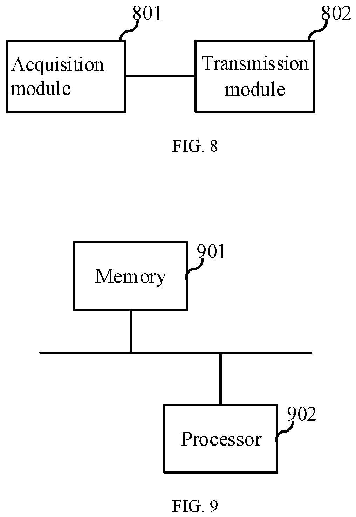

As shown in Fig. 8, the image transmission apparatus includes: an acquisition module 801 configured to acquire, at a current time, the current image captured by an image acquisition device; and a transmission module 802 configured to determine a difference between the current time and the time when an image is transmitted to a cloud desktop last time, and transmit the current image to the cloud desktop in response to the difference being greater than a second preset threshold.

It is not difficult to find that this embodiment is a system embodiment corresponding to embodiment three, and this embodiment can be implemented in cooperation with embodiment three. The related technical details mentioned in embodiment three are also applicable in this embodiment, and are not described herein for simplicity. Accordingly, the related technical details mentioned in this embodiment can also be applied to embodiment three.

It should be noted that each module involved in this embodiment is a logical module. In actual application, a logical unit may be a physical unit or a part of a physical unit, or may be implemented in a combination of a plurality of physical units. In addition, in order to highlight the inventive part of the present disclosure, a unit that is not closely related to solving the technical problems proposed in the present disclosure is not introduced in the present embodiment, but this does not indicate that there are no other units in the present embodiment.

Embodiment six of the present disclosure provides a terminal apparatus, and a structure of the terminal apparatus is shown in FIG. 9. The terminal apparatus includes: at least one processor 901; and a memory 902 in communicative connection to the at least one processor 901, where, the memory 902 stores instructions which, when executed by the at least one processor 901, cause the at least one processor 901 to be capable of executing the image transmission method according to any one of embodiment one to three.

It should be noted that the terminal apparatus, in some embodiments, is a terminal apparatus performing the image transmission method described in embodiment one or two, or, in some embodiments, is a terminal apparatus performing the image transmission method described in embodiment three.

In this embodiment, the processor 901 is, such as a Central Processing Unit (CPU), and the Memory 902 is, such as a Random Access Memory (RAM). The processor 901 and the memory 902 is connected by a bus or by other means, and Fig. 9 illustrates a connection by the bus as an example. The memory 902, which is a non-volatile computer-readable storage medium, is used to store non-volatile software programs, non-volatile computer-executable programs and modules, such as the programs that implement the image transmission method in the embodiments of the present disclosure. The processor 901 executes various functional applications and data processing of the terminal apparatus, that is, implements the image transmission method described in any one of embodiments one to three, by running the non-volatile software program, instructions, and modules stored in the memory 902.

The memory 902, in some embodiments, includes a storage program region and a storage data region, where the storage program region stores an operating system, an application program required for at least one function; the storage data region stores a list of options, etc. Moreover, the memory may include high speed random access memory, and may also include non-volatile memory, such as at least one magnetic disk storage device, flash memory device, or other non-volatile solid state storage device. In some embodiments, the memory 902 includes memory located remotely from the processor 901, which is connected to external devices via a network.

One or more program modules are stored in the memory 902 and, when executed by the one or more processors 901, perform the image transmission method described in any one of embodiments one to three.

Embodiments of the present disclosure provide a non-transitory (non-volatile) computer-readable storage medium having stored thereon computer-executable instructions that used to perform a method in any of the embodiments described above.

The product above can execute the methods provided by the embodiments of the present disclosure, have corresponding functional modules and beneficial effects when executing the methods. Technical details that are not described in this embodiment can be referred to the methods provided by the embodiments of the present disclosure.

As compared with the existing technology, in the embodiments of the present disclosure, by selecting an image to be transmitted from N images and transmitting the image to be transmitted to a cloud desktop, the number of data transmissions between the cloud terminal and the cloud desktop can be decreased, and the requirement for network bandwidth in the local backhaul technology can be reduced, so that it is ensured that the acquired image can still be clearly and smoothly displayed on the cloud terminal in the case of limited data transmitted bandwidth. Alternatively, by transmitting the image to be transmitted to the cloud desktop at fixed time intervals, the number of data transmissions between the cloud terminal and the cloud desktop can be decreased, and the requirement for network bandwidth in the local backhaul technology can be reduced.

It shall be understood by those having ordinary skills in the art that several embodiments are provided above for practicing the present disclosure, and that the scope of the disclosure is limited only by the appended claims.

## Claims

1. An image transmission method applicable to a cloud terminal, comprising:
acquiring a plurality of images captured by the image acquisition device (301), calculating a similarity between an iₜₕ captured image and an (i-1)ₜₕ captured image (302), and storing the iₜₕ captured image into a cache (304) in response to the calculated similarity not exceeding a preset threshold, the i being an integer no less than 2;
acquiring N images captured by the image acquisition device and consecutively stored into the cache, N being an integer greater than 1 (101);
calculating similarities between the N images and a reference image, respectively, the reference image being a locally stored image that is transmitted to a cloud desktop last time (102);
determining a minimum of the similarities between the N images and the reference image, and selecting an image corresponding to the minimum as the image to be transmitted (203); and
transmitting the image to be transmitted to the cloud desktop (104);
wherein calculating a similarity between an iₜₕ captured image and an (i-1)ₜₕ captured image comprises: dividing the iₜₕ captured image into a number of small blocks, comparing grey level and/or brightness and/or contrast of each small block of the iₜₕ captured image to the grey level and/or brightness and/or contrast of each corresponding small block of the (i-1)ₜₕ captured image, and calculating a change value of the grey level and/or brightness and/or contrast; and
wherein calculating similarities between the N images and a reference image comprises: dividing each of the N images and the reference image into a number of small blocks, comparing grey level and/or brightness and/or contrast of each small block of the N images to the grey level and/or brightness and/or contrast of each corresponding small block of the reference image, and calculating a change value of the grey level and/or brightness and/or contrast.

2. The image transmission method of claim 1, after transmitting the image to be transmitted to the cloud desktop (104), further comprising:
deleting, from the cache, images other than the image to be transmitted in the N images.

3. The image transmission method of claim 1, after transmitting the image to be transmitted to the cloud desktop (104), further comprising:
receiving an image returned by the cloud desktop; and
transmitting the image returned by the cloud desktop to a display device for displaying.

4. A terminal apparatus, comprising:
at least one processor (902); and
a memory (901) in communicative connection to the at least one processor (902), wherein,
the memory (901) stores computer-executable instructions which, when executed by the at least one processor (902), cause the at least one processor (902) to execute the image transmission method of any one of claims 1 to 3.

5. A non-transient computer-readable storage medium storing computer-executable instructions which, when executed by at least one processor, cause the at least one processor to execute the image transmission method of any one of claims 1 to 3.

## Patentansprüche

1. Bildübertragungsverfahren, das auf ein Cloud-Terminal anwendbar ist, umfassend:
Erfassen einer Vielzahl von Bildern, die durch die Bilderfassungsvorrichtung (301) aufgenommen wird, Berechnen einer Ähnlichkeit zwischen einem i-ten aufgenommenen Bild und einem (i-1)-ten aufgenommenen Bild (302) und Speichern des i-ten aufgenommenen Bildes in einem Cache (304) als Reaktion darauf, dass die berechnete Ähnlichkeit einen voreingestellten Schwellenwert nicht überschreitet, wobei das i eine ganze Zahl von nicht weniger als 2 ist;
Erfassen von N Bildern, die durch die Bilderfassungsvorrichtung aufgenommen und nacheinander in dem Cache gespeichert werden, wobei N eine ganze Zahl größer als 1 ist (101);
Berechnen von Ähnlichkeiten jeweils zwischen den N Bildern und einem Referenzbild, wobei das Referenzbild ein lokal gespeichertes Bild ist, das letztes Mal an einen Cloud-Desktop übertragen wurde (102);
Bestimmen eines Minimums der Ähnlichkeiten zwischen den N Bildern und dem Referenzbild und Auswählen eines Bildes, das dem Minimum entspricht, als das zu übertragende Bild (203); und
Übertragen des zu übertragenden Bildes an den Cloud-Desktop (104);
wobei das Berechnen einer Ähnlichkeit zwischen einem i-ten aufgenommenen Bild und einem (i-1)-ten aufgenommenen Bild Folgendes umfasst: Aufteilen des i-ten aufgenommenen Bildes in eine Anzahl an kleinen Blöcken, Vergleichen von Graustufe und/oder Helligkeit und/oder Kontrast jedes kleinen Blocks des i-ten aufgenommenen Bildes mit der Graustufe und/oder Helligkeit und/oder dem Kontrast von jedem entsprechenden kleinen Block des (i-1)-ten aufgenommenen Bildes und Berechnen eines Änderungswertes der Graustufe und/oder Helligkeit und/oder des Kontrasts; und
wobei das Berechnen von Ähnlichkeiten zwischen den N Bildern und einem Referenzbild Folgendes umfasst: Aufteilen von jedem der N Bilder und dem Referenzbild in eine Anzahl an kleinen Blöcken, Vergleichen von Graustufe und/oder Helligkeit und/oder Kontrast von jedem kleinen Block der N Bilder mit der Graustufe und/oder Helligkeit und/oder dem Kontrast von jedem entsprechenden kleinen Block des Referenzbildes und Berechnen eines Änderungswertes der Graustufe und/oder Helligkeit und/oder des Kontrasts.

2. Bildübertragungsverfahren nach Anspruch 1, nach dem Übertragen des zu übertragenden Bildes an den Cloud-Desktop (104) ferner umfassend:
Löschen, aus dem Cache, von anderen Bildern als dem Bild, das in den N Bildern zu übertragen ist.

3. Bildübertragungsverfahren nach Anspruch 1, nach dem Übertragen des zu übertragenden Bildes an den Cloud-Desktop (104) ferner umfassend:
Empfangen eines Bildes, das durch den Cloud-Desktop zurückgegeben wird; und
Übertragen des Bildes, das durch den Cloud-Desktop zurückgegeben wird, an eine Anzeigevorrichtung zum Anzeigen.

4. Endgeräteeinrichtung, umfassend:
zumindest einen Prozessor (902); und
einen Speicher (901) in kommunikativer Verbindung mit dem zumindest einen Prozessor (902), wobei
der Speicher (901) computerausführbare Anweisungen speichert, die, wenn sie durch den zumindest einen Prozessor (902) ausgeführt werden, den zumindest einen Prozessor (902) veranlassen, das Bildübertragungsverfahren nach einem der Ansprüche 1 bis 3 auszuführen.

5. Nichtflüchtiges computerlesbares Speichermedium, das computerausführbare Anweisungen speichert, die, wenn sie durch zumindest einen Prozessor ausgeführt werden, den zumindest einen Prozessor veranlassen, das Bildübertragungsverfahren nach einem der Ansprüche 1 bis 3 auszuführen.

## Revendications

1. Procédé de transmission d'images applicable à un terminal en nuage, comprenant :
L'acquisition d'une pluralité d'images capturées par le dispositif d'acquisition d'images (301), le calcul d'une similarité entre une i_{ième} image capturée et une (i-1)_{ième} image capturée (302), et le stockage de la i_{ième} image capturée dans une antémémoire (304) en réponse à la similarité calculée ne dépassant pas un seuil prédéfini, i étant un nombre entier supérieur ou égal à 2 ;
l'acquisition de N images capturées par le dispositif d'acquisition d'images et stockées consécutivement dans l'antémémoire, N étant un nombre entier supérieur à 1 (101) ;
le calcul de similarités entre les N images et une image de référence, respectivement, l'image de référence étant une image stockée localement qui a été transmise à un bureau en nuage la dernière fois (102) ;
la détermination d'un minimum de similarités entre les N images et l'image de référence, et la sélection d'une image correspondant au minimum en tant qu'image à transmettre (203) ; et
la transmission de l'image à transmettre au bureau en nuage (104) ;
ledit calcul d'une similarité entre une i_{ième} image capturée et une (i-1)_{ième} image capturée comprenant : la division de la i_{ième} image capturée en un nombre de petits blocs, la comparaison du niveau de gris et/ou de la luminosité et/ou du contraste de chaque petit bloc de la i_{ième} image capturée au niveau de gris et/ou à la luminosité et/ou au contraste de chaque petit bloc correspondant de la (i-1)_{ième} image capturée, et le calcul d'une valeur de changement du niveau de gris et/ou de la luminosité et/ou du contraste ; et
ledit calcul de similarités entre les N images et une image de référence comprenant : la division de chacune des N images et l'image de référence en un nombre de petits blocs, la comparaison du niveau de gris et/ou de la luminosité et/ou du contraste de chaque petit bloc des N images au niveau de gris et/ou à la luminosité et/ou au contraste de chaque petit bloc correspondant de l'image de référence, et le calcul d'une valeur de changement du niveau de gris et/ou de la luminosité et/ou du contraste.

2. Procédé de transmission d'image selon la revendication 1, après la transmission de l'image à transmettre au bureau en nuage (104), comprenant en outre :
la suppression, de l'antémémoire, d'images autres que l'image à transmettre dans les N images.

3. Procédé de transmission d'image selon la revendication 1, après la transmission de l'image à transmettre au bureau en nuage (104), comprenant en outre :
la réception d'une image renvoyée par le bureau en nuage ; et
la transmission de l'image renvoyée par le bureau en nuage à un dispositif d'affichage en vue de l'affichage.

4. Appareil terminal, comprenant :
au moins un processeur (902) ; et
une mémoire (901) en connexion de communication avec ledit au moins un processeur (902),
ladite mémoire (901) stockant des instructions exécutables par ordinateur qui, lorsqu'elles sont exécutées par le au moins un processeur (902), amènent le au moins un processeur (902) à exécuter le procédé de transmission d'image de l'une quelconque des revendications 1 à 3.

5. Support de stockage non transitoire lisible par ordinateur stockant des instructions exécutables par ordinateur qui, lorsqu'elles sont exécutées par au moins un processeur, amènent ledit au moins un processeur à exécuter le procédé de transmission d'image selon l'une quelconque des revendications 1 à 3.
